(19) Europäisches Patentamt / European Patent Office / Office européen des brevets

(11) **EP 4 769 583 A1**

(12) **EUROPEAN PATENT APPLICATION**

(43) Date of publication:
**01.07.2026 Bulletin 2026/27**

(21) Application number: **24307310.3**

(22) Date of filing: **27.12.2024**

(51) International Patent Classification (IPC):
*H01M 8/04089* (2016.01)    *H01M 8/0432* (2016.01)
*H01M 8/0438* (2016.01)    *H01M 8/04746* (2016.01)
*H01M 8/04992* (2016.01)

(52) Cooperative Patent Classification (CPC):
H01M 8/04388; H01M 8/04089; H01M 8/04328;
H01M 8/04395; H01M 8/04402; H01M 8/0441;
H01M 8/04432; H01M 8/04753; H01M 8/04992

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **PLASTIC OMNIUM NEW ENERGIES FRANCE**
**69007 Lyon (FR)**

(72) Inventors:
• **JANNESARI, Reyhaneh**
  **1200 Bruxelles (BE)**
• **BUCHINGER, Martin**
  **1200 Bruxelles (BE)**

(74) Representative: **LLR**
  **2, rue Jean Lantier**
  **75001 Paris (FR)**

(54) **METHOD FOR MEASURING THE MASS FLOW OF HYDROGEN TRAVERSING A PRESSURE CONTROL VALVE IN A FUEL CELL SYSTEM**

(57)    The invention related to a method for measuring the mass flow of hydrogen traversing a Pressure Control Valve (PCV) (4) in a fuel cell system (1),

The method according to the invention involves a sub-method of calibrating the Pressure Control Valve (PCV) (4) for establishing a lookup table matching voltage supplied to the Pressure Control Valve (PCV) (4) with a value of the mass flow of hydrogen, depending on external parameters such as various electric currents evolution within the Pressure Control Valve (PCV) (4).

Fig. 1

**Description**

The present invention relates to a method for measuring the mass flow of hydrogen in a fuel cell system. Furthermore, the invention relates to a method for detecting a hydrogen leak in a fuel cell system, more particularly a method for detecting a hydrogen leak in a fuel cell system comprising an anodic recirculation loop.

The invention can be used on board off a vehicle. By "vehicle", we mean vehicle such as a car, a motorcycle, a truck, a bus, a train, a boat, a machine, in particular a construction machine such as a forklift.

Typically, a fuel cell system supplies hydrogen as fuel and air as an oxidizer to a fuel cell stack and produces electricity through the electrochemical reaction of hydrogen and oxygen.

A fuel cell system is mounted on a vehicle and drives an electric motor using electricity generated by the fuel cell stack to drive the vehicle. These fuel cell systems are a type of power generation system that electrochemically converts the chemical energy of the fuel directly into electrical energy within the fuel cell stack, rather than converting it into heat through combustion. Here, the fuel cell stack is composed of tens to hundreds of fuel cells, usually composed of Membrane Electrode Assemblies (MEA), gaskets, and separators, stacked to obtain the desired output.

The most critical part of such fuel cell systems is a hydrogen leakage from the fuel cell stack. Currently, hydrogen leakage detection in vehicles uses hydrogen sensors to detect hydrogen leaks in major pipe connections and key areas, such as hydrogen tanks and fuel cell stacks. However, if hydrogen is not emitted to the location where the hydrogen sensor is installed, it is difficult to detect it. In addition, the speed and accuracy of hydrogen leak detection using a hydrogen sensor can vary greatly depending on factors such as accuracy, reliability, durability, mounting location, and vehicle movement status.

A method to detect a hydrogen leakage in a fuel cell system can be based on the comparison of the current produced by the fuel cell system compared to the expected current calculated based on the production yield of the fuel cell system and the amount of hydrogen injected in the fuel cell system. Unfortunately, said method requires the use of a hydrogen mass flow meter, which is an expensive component.

Therefore, there is a need to provide fuel cell systems without expensive components such as a hydrogen mass flow meter or hydrogen sensors, said systems embarking methods for measuring the mass flow of hydrogen or for detecting possible hydrogen leakage in fuel cell systems.

It is an object of the present invention to provide a method for measuring the mass flow of hydrogen in a fuel cell system avoiding the implantation of a hydrogen mass flow meter in the fuel cell system.

Another objective of the invention is to provide a method for detecting a hydrogen leak in ta fuel cell system avoiding the implantation of a hydrogen sensor in the fuel cell system.

The above objectives are accomplished by methods according to the present invention.

According to a first aspect of the present invention, there is provided a method for measuring the mass flow of hydrogen traversing a Pressure Control Valve (PCV) in a fuel cell system, wherein the method involves a sub-method of calibrating the Pressure Control Valve (PCV) for establishing a lookup table matching voltage supplied to the Pressure Control Valve (PCV) with a value of the mass flow of hydrogen, depending on external parameters such as various electric currents evolution within the Pressure Control Valve (PCV).

Thus, the invention is based on a completely new and inventive approach to measure the mass flow of hydrogen traversing a Pressure Control Valve (PCV) in a fuel cell system avoiding the use of an expensive measuring means such as a hydrogen mass flow meter on board of the fuel cell system. The lookup table builds up according to the invention permitting to measure the hydrogen mass flow traversing the Pressure Control Valve (PCV).

By "hydrogen", we intend to mean gaseous hydrogen.

According to a preferred embodiment, the method for measuring the mass flow of hydrogen traversing a Pressure Control Valve (PCV) in a fuel cell system, according to the invention is such that

- the sub-method comprises at least the steps of:

  a. Injecting a hydrogen flow in a hydrogen feeding line comprising the Pressure Control Valve (PCV), a temperature sensor (T) measuring the temperature of the hydrogen injected in the hydrogen feeding line and a means measuring the mass flow of hydrogen, said means being selected from the group consisting of two pressure sensors, a first pressure sensor ($PS_1$) being positioned upstream of the Pressure Control Valve (PCV) and a second pressure sensor ($PS_2$) being positioned downstream of the Pressure Control Valve (PCV), and a hydrogen mass flow meter (HMF),

  b. Applying a first voltage to the Pressure Control Valve (PCV) to set the Pressure Control Valve (PCV) in a first opening state,

  c. Applying a second voltage to the Pressure Control Valve (PCV) to set the Pressure Control Valve (PCV) in a second opening state,

    d. Measuring an electric current evolution within the Pressure Control Valve (PCV) from step b to step c,

    e. Establishing a lookup table matching the voltage supplied to the Pressure Control Valve (PCV) with the mass flow of hydrogen traversing the Pressure Control Valve (PCV), depending on the evolution of the electric current within the Pressure Control Valve (PCV) measured at step d, the temperature of the hydrogen flowing in the hydrogen feeding line and the amount of hydrogen mass flow from step b to step c, said amount being measured by the hydrogen mass flow meter (HMF) or calculated based on the values measured by the pressure sensors (PS$_1$ and PS$_2$),

    f. Obtaining the lookup table,

- Using the lookup table obtained at step f to determine the mass flow of hydrogen traversing the Pressure Control Valve (PCV) in a fuel cell system between a first opening and a second opening of the Pressure Control Valve (PCV).

Thus, the building up of the look up table according to the embodiment hereabove permits to fine tune the measuring the hydrogen mass flow traversing the Pressure Control Valve (PCV).

According to a preferred embodiment of the method for measuring the mass flow of hydrogen traversing a Pressure Control Valve (PCV) in a fuel cell system according to the invention, is such that the amount of hydrogen mass flow is calculated based on the values measured by the pressure sensors (PS$_1$ and PS$_2$) and the temperature sensor (T) using the equations:

$$\Psi\left(\frac{p_{in}(t)}{p_{out}(t)}\right) = \begin{cases} \sqrt{\kappa \left[\frac{2}{\kappa+1}\right]^{\frac{\kappa+1}{\kappa-1}}} & \text{for} \quad p_{out} < p_{cr} \\ \left[\frac{p_{out}}{p_{in}}\right]^{\frac{1}{\kappa}} \cdot \sqrt{\frac{2\kappa}{\kappa-1} \cdot \left[1 - \left(\frac{p_{out}}{p_{in}}\right)^{\frac{\kappa-1}{\kappa}}\right]} & \text{for} \quad p_{out} \geq p_{cr} \end{cases} \qquad \text{(I)}$$

$$p_{cr} = \left[\frac{2}{\kappa+1}\right]^{\frac{\kappa}{\kappa-1}} \cdot p_{in} \qquad \text{(II)}$$

$$\dot{m}(t) = c_d \cdot A(t) \cdot \frac{p_{in}(t)}{\sqrt{R \cdot \vartheta_{in}(t)}} \cdot \Psi\left(\frac{p_{in}(t)}{p_{out}(t)}\right) \qquad \text{(III)}$$

Where:

- $t$ represents the time in seconds,
- $P_{in}$ represents the pressure measured by the first pressure sensor (PS$_1$) being positioned upstream of the Pressure Control Valve (PCV),
- $P_{out}$ represents the pressure measured by the second pressure sensor (PS$_2$) being positioned downstream of the Pressure Control Valve (PCV),
- $\kappa$ represents the Laplace's coefficient or specific heat ratio which is defined as the ratio of the heat capacity at constant pressure (C$_P$) to the heat capacity at constant volume (Cv),
- $P_{cr}$ represents the critical pressure wherein when P$_{out}$ < $P_{cr}$ the hydrogen gas flows according to a laminar regime and when P$_{out}$ ≥ $P_{cr}$ the hydrogen gas flows according to a turbulent regime,
- $\dot{m}$ represents the hydrogen mass flow in gramme/s,
- $C_d$ represents a flow factor, which is an intrinsic characteristic of the valve,
- $A$ represents the cross section of the valve in m$^2$,
- $R$ represents the universal constant of the gas,

- $\vartheta_{in}$ represents the temperature in Kelvin of the hydrogen gas inside the hydrogen feeding line.

Thus, the use of two pressures sensors ($PS_1$ and $PS_2$) and a temperature sensor to build up the lookup table permits to avoid the use of an expensive measuring means such as a hydrogen mass flow meter (HMF).

According to an alternative of the previous embodiment, the method for measuring the mass flow of hydrogen traversing a Pressure Control Valve in a fuel cell system is such that the means measuring the hydrogen mass flow is a hydrogen mass flow meter.

The use of a hydrogen masse flow meter permits to build up a more precise and fine-tuned lookup table.

According to a second aspect of the present invention, there is provided a method for detecting a hydrogen leak in a fuel cell system comprising an anodic recirculation loop.

The method for detecting a hydrogen leak in a fuel cell system comprising an anodic recirculation loop according to the invention is such that the method comprises at least the steps of:

A. injecting a hydrogen flow in a hydrogen feeding line of a fuel cell system comprising a Pressure Control Valve (PCV), said Pressure Control Valve (PCV) being located downstream the hydrogen tank and upstream a connection of the anodic recirculation loop to the hydrogen feeding line,

B. applying a first voltage on the Pressure Control Valve (PCV) to set the Pressure Control Valve (PCV) in a first opening state,

C. applying a second voltage to the Pressure Control Valve (PCV) to set the Pressure Control Valve (PCV) in a second opening state,

D. measuring an electric current evolution within the Pressure Control Valve (PCV) between steps B and C,

E. comparing the electric current evolution measured at step E with the values of the lookup table obtained according to the method for measuring the mass flow of hydrogen traversing the Pressure Control Valve (PCV) in a fuel cell system according to the invention,

F. determining an amount of hydrogen flowed through the Pressure Control Valve between steps B and C, using the lookup table obtained according to the method for measuring the mass flow of hydrogen traversing the Pressure Control Valve (PCV) in a fuel cell system according to the invention,

G. comparing the amount of electric current ($C_1$) traversing the Pressure Control valve (PCV) between steps B and D with a theoretical amount of electric current ($C_2$) expected to traverse the Pressure Control Valve (PCV) obtained according to the method for measuring the mass flow of hydrogen traversing the Pressure Control Valve (PCV) in a fuel cell system according to the invention,

H. if $C_1/C_2 > 1$ concluding to a possible hydrogen leak in the fuel system if $C_1/C_2 > 1$ 1 occurring over a threshold time,

I. checking a possible purge event by opening a purge valve, if a purge event occurred than checking if the period during which $C_1/C_2 > 1$ is above threshold time if yes concluding to a hydrogen leak, if no concluding to no hydrogen leak.

wherein the method being performed at a given electric current produced by the fuel cell system.

By the expression "at a given electric current produced by the fuel cell system", we intend to mean that the electric current produced by the fuel cell system may vary during the hydrogen leak detection or being constant, preferably the electric current produced by the fuel cell system is constant.

The method for detecting a hydrogen leak in a fuel cell system according to the invention enables fast hydrogen leakage detection in the fuel cell system without the need for additional bulky and expensive sensors, making it suitable particularly for automotive fuel cell systems.

According to a preferred embodiment, the method for detecting a hydrogen leak in a fuel cell system comprising an anodic recirculation loop according to the invention is such that the method comprises a step of measuring the pressure inside the hydrogen feeding line downstream the pressure control valve and upstream the connection of the anodic recirculation loop to the hydrogen feeding line with a third pressure sensor ($PS_3$). The third pressure sensor ($PS_3$) may correspond to the first pressure sensor ($PS_2$).

An additional step of measuring the pressure inside the hydrogen feeding line downstream the pressure control valve and upstream the connection of the anodic recirculation loop to the hydrogen feeding line with a third pressure sensor

(PS$_3$) permits to fine tune the detection of a hydrogen leak in the fuel cell system.

According to preferred embodiment of the previous one, the method for detecting a hydrogen leak in a fuel cell system comprising an anodic recirculation loop according to the invention is such that the method comprises a step of maintaining an over pressure of the anodic side of the fuel cell system to the cathodic side of the fuel cell system.

An additional step of maintaining an over pressure of the anodic side of the fuel cell system to the cathodic side of the fuel cell system, the overpressure applied to the anodic side of the fuel cell system permits to create a hydrogen flow from the anodic side of the fuel cell system to the cathodic side of the fuel cell system.

According to preferred embodiment of the two previous one, the method for detecting a hydrogen leak in a fuel cell system comprising an anodic recirculation loop according to the invention is such that the purge event of step I is detected via the step of measuring the pressure inside the hydrogen feeding line downstream the pressure control valve and upstream the connection of the anodic recirculation loop to the hydrogen feeding line with the third pressure sensor (PS$_3$).

An additional step of measuring the pressure inside the hydrogen feeding line downstream the pressure control valve and upstream the connection of the anodic recirculation loop to the hydrogen feeding line with a third pressure sensor (PS$_3$) permits to detect a possible purge of the system without using the signal of the purge valve and offer thus a double control of a possible purge event inducing a safer method of detection of a hydrogen leak.

According to a preferred embodiment, the method for detecting a hydrogen leak in a fuel cell system comprising an anodic recirculation loop according to the invention is such that the method comprises a step of measuring the pressure upstream the pressure control valve and with a fourth pressure sensor (PS$_4$). The fourth pressure sensor (PS$_4$) may correspond to the first pressure sensor (PS$_1$).

An additional step of measuring the pressure upstream the Pressure Control Valve with a fourth pressure sensor (PS$_4$) permits to detect a malfunctioning of the Pressure Control Valve (PCV). An additional step of measuring the pressure upstream of the Pressure Control Valve (PCV) must remain within the safe range; otherwise, the Pressure Control Valve (PCV) may not perform as expected.

According to a preferred embodiment, the method for detecting a hydrogen leak in a fuel cell system comprising an anodic recirculation loop according to the invention is such that the threshold time is higher than 1 s.

A threshold time value higher than 1 s permits to include a purge event during the performing time of the hydrogen leak detection method.

According to a preferred embodiment, the method for detecting a hydrogen leak in a fuel cell system comprising an anodic recirculation loop according to the invention is such that the method comprises a step of measuring the temperature of the hydrogen flow.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

Fig. 1 is a schematic illustration of fuel cell system

Fig. 2 is a diagrammatic illustration of the evolution of electric current produced by the fuel cell system (20), the evolution of the electric current within the Pressure Control Valve (PCV) (21), the evolution of the hydrogen mass flow (22) the evolution of the purge event (23)

Fig. 3 is a diagrammatic illustration of the evolution of electric current produced by the fuel cell system (30), the evolution of the electric current within the Pressure Control Valve (PCV) (31), the evolution of the hydrogen mass flow (32) before, during and after a purge event (33)

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

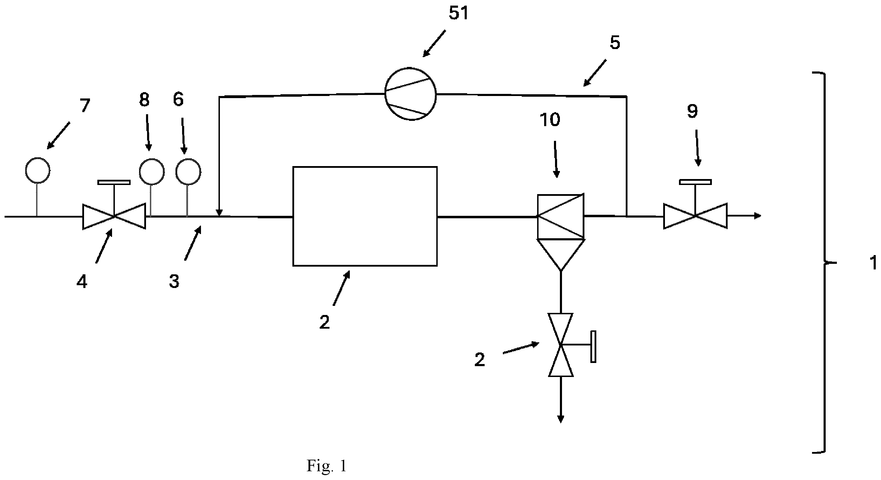

Figure 1 represents a part of a fuel cell system 1 on which the method to detect a hydrogen leak is performed. Said fuel cell system 1 comprising at least one fuel cell stack 2, a hydrogen feeding line 3, a Pressure Control Valve 4, an anodic recirculation loop 5 comprising a recirculation pump 51, a third pressure sensor 6, a fourth pressure sensor 7, a temperature sensor 8, a purge valve 9, a water trap 10 and a drain valve 11. The method for detecting a hydrogen leak in the fuel cell system 1 comprising an anodic recirculation loop 5 comprises the steps of:

A. injecting a hydrogen flow in the hydrogen feeding line 3 of the fuel cell system 1 comprising the Pressure Control Valve (PCV) 4 located downstream the hydrogen tank and upstream the connection of the anodic recirculation loop 5 to the hydrogen feeding line 3,

B. applying a first voltage on the Pressure Control Valve (PCV) 4 to set the Pressure Control Valve (PCV) 4 in a first opening state,

C. applying a second voltage to the Pressure Control Valve (PCV) 4 to set the Pressure Control Valve (PCV) 4 in a second opening state,

D. Measuring the electric current evolution within the Pressure Control Valve (PCV) 4 between steps B and C,

E. Comparing the electric current evolution measured at step D with the values of the lookup table obtained according to the method for measuring the mass flow of hydrogen traversing the Pressure Control Valve (PCV) in a fuel cell system 1 according to the invention,

F. Determining an amount of hydrogen flowed through the Pressure Control Valve (PCV) 4 between steps B and C, using the lookup table obtained according to the method for measuring the mass flow of hydrogen traversing the Pressure Control Valve (PCV) 4 in a fuel cell system 1 according to the invention,

G. comparing the amount of electric current ($C_1$) traversing the Pressure Control valve (PCV) 4 between steps B and D with a theoretical amount of electric current ($C_2$) expected to traverse the Pressure Control Valve (PCV) 4 obtained according to method for measuring the mass flow of hydrogen traversing the Pressure Control Valve (PCV) 4 in a fuel cell system 1 according to the invention,

H. If $C_1/C_2 > 1$ concluding to a possible hydrogen leak in the fuel cell system 1 if $C_1/C_2 > 1$ occurring over a threshold time, said threshold time being preferably higher than 1 s.

I. Checking a possible purge event by opening a purge valve 9, if a purge event occurred than checking if the period during which $C_1/C_2 > 1$ is above the threshold time if yes concluding to a hydrogen leak, if no concluding to no hydrogen leak. Said purge event is preferably detected via a step of measuring the pressure inside the hydrogen feeding line 3 downstream the Pressure Control Valve (PCV) 4 and upstream the connection of the anodic recirculation loop 5 to the hydrogen feeding line 3 with the third pressure sensor ($PS_3$) 6.

wherein the method being performed at a given electric current produced by the fuel cell system 1.

The method for detecting a hydrogen leak in a fuel cell system 1 comprising an anodic recirculation loop 5 comprises also a step of measuring the pressure upstream the pressure control valve and with a fourth pressure sensor (PS4) 7. This permits to detect a malfunctioning of the Pressure Control Valve (PCV) 4.

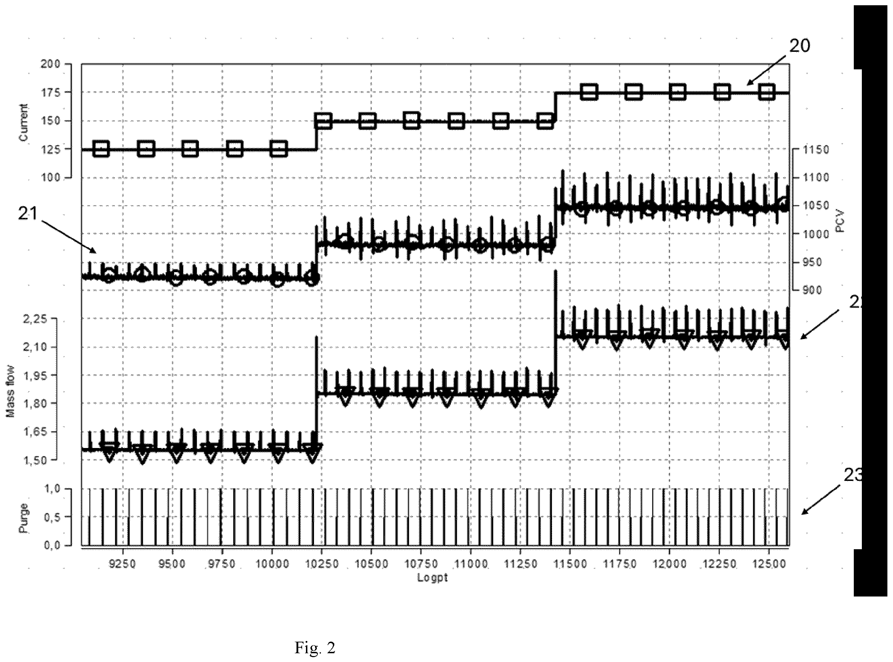

Fig. 2 is a diagrammatic illustration of the evolution of electric current produced by the fuel cell system 20, the evolution of the electric current within the Pressure Control Valve (PCV) 21, the evolution of the hydrogen mass flow 22 and the evolution of the purge event 23 as a function of time. We see that the evolution of the electric current (in Amper) produced by the fuel cell system 20 is similar to the evolution of the electric current (in milliAmper) 21 within the Pressure Control Valve (PCV) and the hydrogen mass flow (in gramme/second) 22. The peaks in the in the evolution of the electric current (in milliAmper) 21 within the Pressure Control Valve (PCV) and the hydrogen mass flow (in gramme/second) 22 are related to a purge event 23, the duration of the purge event being expressed in second, the duration of the purge event being equal to 1 second.

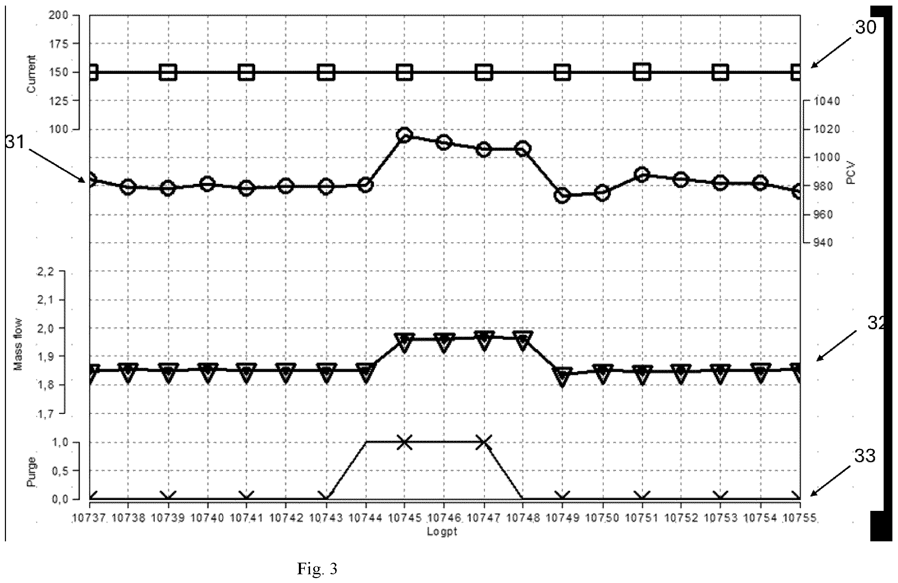

Fig. 3 is a diagrammatic illustration of the evolution of electric current produced by the fuel cell system 30, the evolution of the electric current within the Pressure Control Valve (PCV) 31, the evolution of the hydrogen mass flow 32 before, during and after a purge event 33 as a function of time, the duration a purge event being equal to 1 second. We see the effect of the purge event 33 on the hydrogen mass flow 31 (in gramme/second) and the adaption of the opening of the Pressure Control Valve translated by the evolution of the electric current traversing said Pressure Control Valve (in milliAmper) 31 to maintain a constant production of the electric current 30 (in Amper) produced by the fuel cell system.

**Claims**

1.  Method for measuring the mass flow of hydrogen traversing a Pressure Control Valve (PCV) (4) in a fuel cell system (1), **characterized in that** the method involves a sub-method of calibrating the Pressure Control Valve (PCV) (4) for establishing a lookup table matching voltage supplied to the Pressure Control Valve (PCV) (4) with a value of the mass flow of hydrogen, depending on external parameters such as various electric currents evolution within the Pressure Control Valve (PCV) (4).

2.  Method for measuring the mass flow of hydrogen traversing a Pressure Control Valve (PCV) (4) in a fuel cell system (1) according to claim 1, wherein

    • the sub-method comprises at least the steps of:

    a. Injecting a hydrogen flow in a hydrogen feeding line comprising the Pressure Control Valve (PCV) (4), a temperature sensor (T) (8) measuring the temperature of the hydrogen injected in the hydrogen feeding line and a means measuring the mass flow of hydrogen, said means being selected from the group consisting of two pressure sensors, a first pressure sensor ($PS_1$) (7) being positioned upstream of the Pressure Control Valve (PCV) (4) and a second pressure sensor ($PS_2$) (6) being positioned downstream of the Pressure Control Valve (PCV) (4), and a hydrogen mass flowmeter (HMF),
    b. Applying a first voltage to the Pressure Control Valve (PCV) (4) to set the Pressure Control Valve (PCV) (4) in a first opening state,
    c. Applying a second voltage to the Pressure Control Valve (PCV) (4) to set the Pressure Control Valve (PCV) (4) in a second opening state,
    d. Measuring an electric current evolution within the Pressure Control Valve (PCV) (4) from step b to step c,
    e. Establishing a lookup table matching the voltage supplied to the Pressure Control Valve (PCV) (4) with the mass flow of hydrogen traversing the Pressure Control Valve (PCV) (4), depending on the evolution of the electric current within the Pressure Control Valve (PCV) measured at step d, the temperature of the hydrogen flowing in the hydrogen feeding line (3) and the amount of hydrogen mass flow traversing the Pressure Control Valve (PCV) (4) from step b to step c, said amount being measured by the hydrogen mass flowmeter (HMF) or calculated based on the values measured by the pressure sensors ($PS_1$ and $PS_2$),
    f. Obtaining the lookup table.

    • Using the lookup table obtained at step f to determine the mass flow of hydrogen traversing the Pressure Control Valve (PCV) (4) in the fuel cell system (1) between a first opening and a second opening of the valve.

3.  Method for measuring the mass flow of hydrogen traversing a Pressure Control Valve (PCV) (4) in a fuel cell system (1) according to claim 2, wherein the amount of hydrogen mass flow is calculated based on the values measured by the pressure sensors ($PS_1$ and $PS_2$) and the temperature sensor (T) using the equations by the equations:

$$\Psi\left(\frac{p_{in}(t)}{p_{out}(t)}\right) = \begin{cases} \sqrt{\kappa\left[\frac{2}{\kappa+1}\right]^{\frac{\kappa+1}{\kappa-1}}} & \text{for} \quad p_{out} < p_{cr} \\ \left[\frac{p_{out}}{p_{in}}\right]^{\frac{1}{\kappa}} \cdot \sqrt{\frac{2\kappa}{\kappa-1} \cdot \left[1 - \left(\frac{p_{out}}{p_{in}}\right)^{\frac{\kappa-1}{\kappa}}\right]} & \text{for} \quad p_{out} \geq p_{cr} \end{cases}$$

$$\text{(I)}$$

$$p_{cr} = \left[\frac{2}{\kappa+1}\right]^{\frac{\kappa}{\kappa-1}} \cdot p_{in}$$

$$\text{(II)}$$

$$\dot{m}(t) = c_d \cdot A(t) \cdot \frac{p_{in}(t)}{\sqrt{R \cdot \vartheta_{in}(t)}} \cdot \Psi \left( \frac{p_{in}(t)}{p_{out}(t)} \right) \qquad \text{(III)}$$

Where:

- $t$ represents the time in seconds,
- $P_{in}$ represents the pressure measured by the first pressure sensor (PS$_1$) being positioned upstream of the Pressure Control Valve (PCV),
- $P_{out}$ represents the pressure measured by the second pressure sensor (PS$_2$) being positioned downstream of the Pressure Control Valve (PCV),
- $\kappa$ represents the Laplace's coefficient or specific heat ratio which is defined as the ratio of the heat capacity at constant pressure (C$_P$) to the heat capacity at constant volume (Cv),
- $P_{cr}$ represents the critical pressure wherein when $P_{out} < P_{cr}$ the hydrogen gas flows according to a laminar regime and when $P_{out} \geq P_{cr}$ the hydrogen gas flows according to a turbulent regime,
- $\dot{m}$ represents the hydrogen mass flow in gramme/s,
- $C_d$ represents a flow factor, which is an intrinsic characteristic of the valve,
- $A$ represents the cross section of the valve in m2,
- $R$ represents the universal constant of the gas,
- $\vartheta_{in}$ represents the temperature in Kelvin of the hydrogen gas inside the hydrogen feeding line.

**4.** Method for measuring the mass flow of hydrogen traversing a Pressure Control Valve (PCV) (4) in a fuel cell system (1) according to claim 2, wherein the means measuring the hydrogen mass flow is a hydrogen mass flow meter.

**5.** Method for detecting a hydrogen leak in a fuel cell system (1) comprising an anodic recirculation loop (5), the method comprises at least the steps of:

A. injecting a hydrogen flow in a hydrogen feeding line (3) of a fuel cell system (1) comprising a Pressure Control Valve (PCV) (4), said Pressure Control Valve (PCV) (4) being located downstream the hydrogen tank and upstream a connection of the anodic recirculation loop (5) to the hydrogen feeding line (3),

B. applying a first voltage on the Pressure Control Valve (PCV) (4) to set the Pressure Control Valve (PCV) (4) in a first opening state,

C. applying a second voltage to the Pressure Control Valve (PCV) (4) to set the Pressure Control Valve (PCV) in a second opening state,

D. measuring an electric current evolution within the Pressure Control Valve (PCV) (4) between steps B and C,

E. comparing the electric current evolution measured at step D with the values of the lookup table obtained according to the method for measuring the mass flow of hydrogen traversing the Pressure Control Valve (PCV) (4) in a fuel cell system (1) according to any one of claim 1 to 4,

F. determining an amount of hydrogen flowed through the Pressure Control Valve (PCV) (4) between steps B and C, using the lookup table obtained according to the method for measuring the mass flow of hydrogen traversing the Pressure Control Valve (PCV) (4) in a fuel cell system (1) according to any one of claim 1 to 4,

G. comparing the amount of electric current (C$_1$) traversing the Pressure Control valve (PCV) (4) between steps B and D with a theoretical amount of electric current (C$_2$) expected to traverse the Pressure Control Valve (PCV) (4) obtained according to the method for measuring the mass flow of hydrogen traversing the Pressure Control Valve (PCV) (4) in a fuel cell system (1) according to any one of claim 1 to 4,

H. if $C_1/C_2 > 1$ concluding to a possible hydrogen leak in the fuel system if $C_1/C_2 > 1$ occurring over a threshold time,

I. checking a possible purge event by opening a purge valve (9), if a purge event occurred than checking if the period during which $C_1/C_2 > 1$ is above the threshold time if yes concluding to a hydrogen leak, if no concluding to no hydrogen leak.

wherein the method being performed at a given electric current produced by the fuel cell system.

**6.** Method for detecting a hydrogen leak in a fuel cell system (1) comprising an anodic recirculation loop (5) according to claim 5, wherein the method comprises a step of measuring the pressure inside the hydrogen feeding line (3) downstream the Pressure Control Valve (PCV) (4) and upstream the connection of the anodic recirculation loop (5) to the hydrogen feeding line (3) with a third pressure sensor (PS$_3$) (6),

7. Method for detecting a hydrogen leak in a fuel cell system (1) comprising an anodic recirculation loop (5) according to claim 6, wherein the method comprises a step of maintaining an over pressure of the anodic side of the fuel cell system (1) to the cathodic side of the fuel cell system (1).

8. Method for detecting a hydrogen leak in a fuel cell system (1) comprising an anodic recirculation loop (5) according to any one of claim 6 to 7, wherein the purge event of step I is detected via the step of measuring the pressure inside the hydrogen feeding line (3) downstream the Pressure Control Valve (PCV) (4) and upstream the connection of the anodic recirculation loop (5) to the hydrogen feeding line (3) with the third pressure sensor (PS$_3$) (6).

9. Method for detecting a hydrogen leak in a fuel cell system (1) comprising an anodic recirculation loop (5) according to any one of claim 6 to 8, wherein the method comprises a step of measuring the pressure upstream the Pressure Control Valve (PCV) (4) and with a fourth pressure sensor (PS$_4$) (7),

10. Method for detecting a hydrogen leak in a fuel cell system (1) comprising an anodic recirculation loop (5) according to any one of claim 5 to 9, wherein the threshold time is higher than 1 s.

11. Method for detecting a hydrogen leak in a fuel cell system (1) comprising an anodic recirculation loop (5) according to any one of claim 5 to 10, wherein the method being performed at a constant electric current produced by the fuel cell system.

Fig. 1

Fig. 2

Fig. 3

Europäisches
Patentamt
European
Patent Office
Office européen
des brevets

## EUROPEAN SEARCH REPORT

**Application Number**

EP 24 30 7310

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 5 406992 B2 (KAWASAKI HEAVY IND LTD) 5 February 2014 (2014-02-05) * paragraph [0046] - paragraph [0049] * ----- | 1-11 | INV. H01M8/04089 H01M8/0432 H01M8/0438 |
| A | JP 5 384543 B2 (HONDA MOTOR CO LTD) 8 January 2014 (2014-01-08) * paragraph [0068] - paragraph [0084]; figure 14 * ----- | 1-11 | H01M8/04746 H01M8/04992 |
| A | WO 2007/069472 A1 (TOYOTA MOTOR CO LTD [JP]; HASUKA YOSHINOBU [JP] ET AL.) 21 June 2007 (2007-06-21) * page 8 - page 9 * ----- | 1-11 | |

**TECHNICAL FIELDS SEARCHED (IPC)**

H01M

The present search report has been drawn up for all claims

| Place of search | Date of completion of the search | Examiner |
|---|---|---|
| Munich | 13 June 2025 | Wiedemann, Eric |

EPO FORM 1503 03.82 (P04C01)

EP 4 769 583 A1

## ANNEX TO THE EUROPEAN SEARCH REPORT
## ON EUROPEAN PATENT APPLICATION NO.

EP 24 30 7310

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| JP 5406992 | B2 | 05-02-2014 | CA | 2806808 A1 | 09-02-2012 |
| | | | CN | 103003607 A | 27-03-2013 |
| | | | EP | 2602524 A1 | 12-06-2013 |
| | | | JP | 5406992 B2 | 05-02-2014 |
| | | | JP | WO2012017666 A1 | 03-10-2013 |
| | | | KR | 20130052615 A | 22-05-2013 |
| | | | US | 2013160874 A1 | 27-06-2013 |
| | | | WO | 2012017666 A1 | 09-02-2012 |
| JP 5384543 | B2 | 08-01-2014 | CN | 102655239 A | 05-09-2012 |
| | | | DE | 102012203344 A1 | 06-09-2012 |
| | | | JP | 5384543 B2 | 08-01-2014 |
| | | | JP | 2012185971 A | 27-09-2012 |
| | | | US | 2012225329 A1 | 06-09-2012 |
| WO 2007069472 | A1 | 21-06-2007 | BR | PI0619609 A2 | 11-12-2012 |
| | | | CA | 2630401 A1 | 21-06-2007 |
| | | | CN | 101326667 A | 17-12-2008 |
| | | | EP | 1965458 A1 | 03-09-2008 |
| | | | EP | 2276096 A1 | 19-01-2011 |
| | | | JP | 5041272 B2 | 03-10-2012 |
| | | | JP | 2007188857 A | 26-07-2007 |
| | | | KR | 20080067379 A | 18-07-2008 |
| | | | RU | 2359367 C1 | 20-06-2009 |
| | | | US | 2009233132 A1 | 17-09-2009 |
| | | | US | 2010285382 A1 | 11-11-2010 |
| | | | WO | 2007069472 A1 | 21-06-2007 |

EPO FORM P0459

For more details about this annex : see Official Journal of the European Patent Office, No. 12/82